(19) Europäisches Patentamt
European Patent Office
Office européen des brevets

(11) Publication number: **0 006 012**
**B1**

(12) # EUROPEAN PATENT SPECIFICATION

(45) Date of publication of patent specification: **24.10.84**

(51) Int. Cl.$^3$: **A 01 N 43/78,** C 07 D 307/68

(21) Application number: **79301016.6**

(22) Date of filing: **31.05.79**

(54) **Furan-3-carboxanilide-based fungicidal compositions and method of applying them.**

(30) Priority: **31.07.78 GB 3175978**
**15.08.78 GB 3331978**
**31.05.78 DE 2823818**

(43) Date of publication of application:
**12.12.79 Bulletin 79/25**

(45) Publication of the grant of the patent:
**24.10.84 Bulletin 84/43**

(84) Designated Contracting States:
**BE CH FR LU NL**

(56) References cited:
**FR-A-2 291 973**
**NL-A-6 909 407**
**US-A-4 054 585**

(73) Proprietor: **UNIROYAL LIMITED**
**Newbridge Midlothian EH28 8LG, Scotland (GB)**

(72) Inventor: **Clark, Michael Lawler**
**177, Leeds Road**
**Harrogate North Yorkshire (GB)**

(74) Representative: **Harrison, Michael Robert et al**
**URQUHART-DYKES & LORD 11th Floor Tower House Merrion Way**
**Leeds LS2 8PB West Yorkshire (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

It is well known to use furan-3-carboxamides as fungicides; see for example US patents Nos 3,959,481; 4,054,585; 3,903,293 and 3,862,966. Other carboxamides are disclosed in United Kingdom patent specification No 1,215,066.

Those compounds, though effective in many applications are not effective against all forms of fungi which attack seeds. Improvements are required in seed dressing compositions.

This invention relates to fungicidal compositions. According to the present invention there is provided a fungicidal composition which comprises (I) a furan-3-carboxanilide characterised in that the composition is a synergistic composition including one or both of:

(II) 1-($\beta$-allyloxy)-2,4-dichlorophenethyl)-imidazole;

and

(III) 2-(4-thiazolyl)-1H-benzimidazole.

A composition in accordance with the present invention may include other components for instance, carriers, diluents, solvents, dyes, insecticides and/or repellant materials.

The term furan-3-carboxanilide as used in the specification and claims means compounds of the structural formula

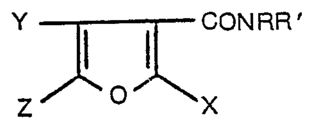

wherein R is hydrogen, methyl, or other alkyl, acyl, aroyl (e.g. benzoyl), sulfenyl (e.g. trichlormethyl sulfenyl); R′ is phenyl or substituted phenyl. The phenyl substitution may consist of alkyl, alkoxy, nitro, halo, carboxy or phenyl such as biphenyl. R and R′ can be joined by forming hetrocyclic groups such as morpholino and other ring structures; X, Y and Z can be independently selected from hydrogen, $NH_2$, alkyl, substituted alkyl (e.g. hydroalkyl, chloroalkyl, nitroalkyl) halo, alkenyl (e.g. alkyl) Y and Z together are $\alpha$-$\omega$-alkylene (e.g. tetramethylene), phenyl, substituted phenyl (e.g. alkylphenyl, halophenyl, alkexyphenyl).

The preferred carboxanilides are those wherein X is methyl and Y and Z are independently selected from the group consisting of H and methyl e.g. 2-methylfuran-3-carboxanilide, 2,5-dimethylfuran-3-carboxanilide or 2,4,5-trimethylfuran-3-carboxanilide.

A composition in accordance with the present invention may be used as a fungicide and is particularly useful when applied to seeds. Thus a composition according to the present invention provides a seed dressing with a wide spectrum of activity, together with enhanced or synergistic activity against certain fungi.

For the control of phytopathogenic fungi on seed (e.g. *Calonectria nivalis, Pyrenophora graminea, Tilletia caries, Ustilago avenae Septoria nodorum, Telletia foetida, Ustilago, hordei, Ustilago nigra, Urocystis occulata, Pyrenophora avenae, Cochliobolus sativus*) materials containing mercury are mainly used. However, these materials possess the disadvantage of toxicity to warm blooded animals. Other less toxic materials are not satisfactory on account of their narrow spectrum of activity.

A composition of the present invention in the form of a seed dressing is less toxic than the mercury containing dressings and is suitable for agricultural, gardening and forestry use whether in the form of a polyvalent seed dressing (combination of I+II or II+III) or a Universal seed dressing (combination of I+II+III).

A composition in accordance with the present invention may be used together with one or more additional pesticidal materials such as insecticides (for instance organochlorine compounds such as Lindane, organophosphoric esters such as Diazinon, Isazofos, and Thiofanox and carbamates such as Carbofuran, Mercaptodimethar, and Bendiocarb) and repellants (such as anthraquinone, thioanthraquinone, Benzathrone, Ziram and diphenylguanidine) to protect the seeds against pests such as insects and birds.

When compared with traditional mercury containing Universal seed dressings, the compositions in accordance with the present invention possess a wider spectrum of activity (e.g. control of *Ustilago nuda, Ustilago tritici, Typhula incarnata, Rhynchosporium secalis, Erysiphe graminis* and a higher degree of activity against other seed pathogens (e.g. *Pyrenophora avenae Cochliobolus sativus.*).

Compounds I, II and III are described in U.S. patent specification No. 3,959,481, DE—OS 20 63 857 and Phytopath Z. 48, 29—72, 1963, respectively. The composition of the present invention may include one or more carrier materials such as the minerals talc, kaolin, bentonite and barytes, stickers such as Spindeloil, ethylene glycol and polyvinylacetate. A composition may include pigments such as iron oxide and Rubin Toner.

A composition in accordance with the present invention in the form of a powder may be formulated by mixing together all the dry materials, including the carrier and additives until a homogenous mixture is formed. The stickers are then added and the whole mixed again until the mixture becomes homogenous.

In the case of a liquid formulation, organic solvents such as xylene, dimethyl formamide, ethylene glycol and methanol and cyclohexane are used as diluting agents and mixed together with surface active agents (Calcium Dodecylbenzensulphonate, polyglycolether and Arylpolyether alcohols) as well as a dye (e.g. Rhodamine and methylviolet). The Compounds I and III are mixed with the Solvent and other additives until all materials are dissolved and a clear liquid results. Then Compound II, if used, is mixed in until a homogenous mixture is formed. Further solvent is then added to the desired total volume. If necessary the resultant mixture is filtered.

Preferably a composition in accordance with the present invention comprises from 0.5 to 30% of Compound I, 0.5 to 10% of Compound II and 0.5 to 15% of Compound III. More preferably the composition contains from 2 to 15% of Compound I, from 2 to 5% of Compound II and from 2 to 10% of Compound III.

A composition in accordance with the present invention is preferably applied to seed such that the amounts of the active compound applied per 100 kg. of seed are as follows:

| | |
|---|---|
| Compound I | from 1 to 60 gm a.i. |
| Compound II | from 1 to 20 gm a.i. |
| Compound III | from 1 to 30 gm a.i. |

More preferably the amounts are as follows:

| | |
|---|---|
| Compound I | from 4 to 30 gm a.i. |
| Compound II | from 3 to 15 gm a.i. |
| Compound III | from 3 to 20 gm. a.i. |

Compositions in accordance with the present invention may be applied to the seeds of, for instance, rye, wheat, barley and oats.

The present invention also provides a method of protecting seeds against fungi, the method comprising applying to the seeds a composition in accordance with the invention.

Examples of the invention will now be described, the seed treatment method being carried out in accordance with the BBA guidelines 4—1.1 (March 1974) Ehle, H., Frohbeyer, P.—E., Reinhard, H. and Röder, K. (1974), "Preliminary guidlines for the testing of seed dressings against cereal diseases", March 1974, published by BBA, Messeweg 11/12, 3300 Braunschweig.

The advantages of the invention may be more readily appreciated by reference to the following examples. Throughout the following examples the Compound I used is 2,4,5-trimethylfuran-3-carboxanilide.

Example 1

Effectiveness against Snow Mould on Rye (Calonectria novalis)

Naturally infected rye seed was treated in the greenhouse with the compositions referred to in Table 1 (200 g seed dressing)/100 kg. seed) and planted out in garden soil in wooden boxes. The level of infection was determined from the occurrence of the fungi in the untreated control and the disinfectant effect was repeatedly estimated.

TABLE 1

| Preparation | % Degree of Infection relative |
|---|---|
| 1a Powder Seed Dressing 1 (15% + II (2.5%) + III (2.5%) + carrier, additives and dyes 80%) | 10.7 |
| 1b Liquid Seed Dressing I (15%) + II (2.5%) + III (2.5%) + solvents, additives and dyes (80%) | 16.3 |
| Fuberidozole + Quintozene (3%) + (25%) + carrier, additives and dyes (72%) | 44.2 |
| Untreated control | 100.0 |

The results were confirmed under outdoor conditions.

Example 2

Effectiveness against Bunton wheat (Tilletia caries)

Wheat seed inoculated with spores was treated (200 g seed dressing/100 kg. seed) and planted in open land. Before the harvest the ears infected with bunt were counted. The results are given in Table 2.

TABLE 2

| Preparation | % Degree of Infection (relative) |
|---|---|
| 1a Powder Seed Dressing I (15%) + II (2.5%) + III (2.5%) + carrier, additives and dyes (80%) | 0.00 |
| 1b Liquid Seed Dressing I (15%) + II (2.5%) + III (2.5%) + solvent, additives and dyes (80%) | 0.00 |
| Methoxy-ethyle mercury silicate (4.5%) + carrier, additives and dyes (95.5%) | 0.49 |
| Untreated control | 100.00 |

Preparations 1a and 1b gave simultaneous control of loose smut on wheat *(Ustilago tritici)*

Example 3

Effectiveness against Loose Smut on Oats (Ustilago avenae)

Oat seed which was infected by the infiltration method of Zade (improved by Thiede 1963) was treated (200 gm. seed dressing/100 kg. seed) and planted outdoors. Before the harvest the infected panicles were counted. The results are given in Table 3.

TABLE 3

| Preparation | % Degree of Infection (relative) |
|---|---|
| 1a Powder Seed Dressing I(15%) + II (2.5%) + III (2.5%) + carrier, additives and dye (80%) | 0.00 |
| 1b Liquid Seed Dressing I (15%) + II (2.5%) + III (2.5%) + solvent, additives and dye (80%) | 0.00 |
| Untreated control | 100.00 |

Example 4

Effectiveness against Loose Smut on Barley (Ustilago nuda)

Naturally infected barley seed was treated (200 g seed dressing/100 kg. seed) and planted out of doors. Before the harvest the infected ears were counted. The results are given in Table 4.

TABLE 4

| Preparation | % Degree of Infection (relative) |
|---|---|
| 1a Powder Seed Dressing I (15%) + II (2.5%) + III (2.5%) + carrier, additives and dye (80%) | 1.30 |
| 1b Liquid Seed Dressing I (15%) + II (2.5%) + III (2.5%) + solvent, additives and dye (80%) | 1.10 |
| Carboxin (48%) + Methoxy ethyl mercury silicate (3.4%) + carrier, additives and dye (48.6%) | 2.30 |
| Methoxy ethyl mercury silicate (4.5%) + carrier, additives and dye (95.5%) | 100.00 |

Example 5

Effectiveness against Leaf Stripe on Barley (Pyrenophora graminea)

Naturally infected barley seed was treated (200 g seed dressing/100 kg. seed) and planted out of doors. The results are given in Table 5.

TABLE 5

| Preparation | % Degree of Infection (relative) |
|---|---|
| 1a Powder Seed Dressing I (15%) + II (2.5%) III (2.5%) + carrier, additives and dye (80%) | 0.00 |
| 1b Liquid Seed Dressing I (15%) + II (2.5%) + III (2.5%) + solvent, and dye (80%) | 0.90 |
| Methoxy ethyl mercury silicate (4.5%) + carrier, additives and dye (95.5%) | 3.60 |
| Untreated control | 100.00 |

Example 6

Synergistic effect against Snow Mould on Rye (Calonectia nivalis)

Naturally infected Rye seed was treated in the greenhouse with preparations given in the following table and planted out in the garden soil in wooden boxes. Level of infection in the untreated control was determined and the disinfectant effect was repeatedly estimated. The results are given in Table 6.

TABLE 6

| Preparation | Rates of Application | % Degree of Infection (relative) |
|---|---|---|
| I | 30 | 23.1 |
| III | 5 | 10.2 |
| (I + III) | (30 + 5) | 0.1 |
| Untreated control | | 100.00 |

Example 7

Effectiveness against Loose Smut on Barley (Ustilago nuda)

Naturally infected barley seed was treated (200 g seed dressing/100 kg. seed) and planted out of

doors. Before the harvest the infected ears were counted. The results are given in Table 7.

TABLE 7

| Preparation | % Degree of Infection (relative) |
|---|---|
| 1a Powder Seed Dressing I (15%) + II (2.5%) + carrier, additives and dyes (82.5%) | 0.00 |
| 1b Liquid Seed Dressing I (15%) + (2.5%) + solvent, additives and dyes (82.5%) | 0.00 |
| Methoxy-ethyl mercury silicate (4.5%) + carrier, additives and dye (95.5%) | 100.00 |
| Untreated control | 100.00 |

Example 8

Effectiveness against leaf stripe on Barley (Helminthosporium graminium)

Naturally infected barley seed was treated (200 g seed dressing/100 kg. seed) and planted out of doors. The results are given in Table 8.

TABLE 8

| Preparation | % Degree of Infection (relative) |
|---|---|
| 1a Powder Seed Dressing I (15%) + II (2.5%) + carrier, additives and dye (82.5%) | 0.5 |
| 1b Liquid Seed Dressing I (15%) + II (2.5%) + solvent, additives and dye (82.5%) | 0.4 |
| Methoxy-ethyl mercury silicate (4.5%) + carrier, additives and dye (95.5%) | 3.60 |
| Untreated control | 100.00 |

**Claims**

1. A fungicidal composition which comprises (I) a furan-3-carboxanilide characterised in that the composition is a synergistic composition including one or both of:
(II) 1-($\beta$-allyloxy)-2,4-dichlorophenethyl)-imidizole; and
(III) 2-(4-thiazolyl)-1H-benzimidazole.

2. A composition according to claim 1 characterised in that the carboxanilide is 2-methylfuran-3-carboxanilide, 2,5-dimethylfuran-3-carboxanilide or 2,4,5-trimethylfuran-3-carboxanilide.

3. A composition according to claim 1 or claim 2 characterised in that the fungicidal composition is dissolved in a solvent.

4. A composition according to any of the preceding claims characterised in that the fungicidal composition is compounded with a carrier.

5. A composition according to claim 4 characterised in that the carrier is mineral talc, kaolin or bentonite.

6. A composition according to any of the preceding claims characterised in that the composition includes from 0.5 to 30% of furan-3-carboxanilide, from 0.5 to 10% of compound (I) and/or from 0.5 to 15% of compound (II).

7. A composition according to claim 6 characterised in that the composition includes from 2 to 10% of compound (III).

8. A method of protecting seeds against fungal disease characterised in that the method comprises applying to the seeds a fungicidally effective amount of a composition in accordance with any of the preceding claims.

9. A method according to claim 8 characterised in that the composition is applied to the seed such that the amounts of the active compound applied per 100 kg of seed are as follows:

| | | |
|---|---|---|
| (I) | furan-3-carboxanilide | from 4 to 30 gm |
| | compound (II) | from 3 to 15 gm |
| | compound (III) | from 3 to 20 gm |

**Patentansprüche**

1. Fungizides Mittel, in dem (I) ein Furan-3-carboxanilid enthalten ist, dadurch gekennzeichnet, daß das Mittel ein synergistisches Mittel ist, das
(II) 1-(β-Allyloxy)-2,4-dichlorphenethyl)-imidazol und/oder
(III) 2-(4-Thiazolyl)-1H-benzimidazol
enthält.

2. Mittel nach Anspruch 1, dadurch gekennzeichnet, daß das Carboxanilid 2-Methylfuran-3-carboxanilid, 2,5-Dimethylfuran-3-carboxanilid oder 2,4,5-Trimethylfuran-3-carboxanilid ist.

3. Mittel nach Anspruch 1 oder 2, dadurch gekennzeichnet, daß das fungizide Mittel in einem Lösungsmittel gelöst ist.

4. Mittel nach einem der vorhergehenden Ansprüche, dadurch gekennzeichnet, daß das fungizide Mittel mit einem Träger vermischt ist.

5. Mittel nach Anspruch 4, dadurch gekennzeichnet, daß der Träger mineralischer Talk, Kaolin oder Bentonit ist.

6. Mittel nach einem der vorhergehenden Ansprüche, dadurch gekennzeichnet, daß das Mittel 0,5 bis 30% des Furan-3-carboxanilids, 0,5 bis 10% der Verbindung (II) und/oder 0,5 bis 15% der Verbindung (III) enthält.

7. Mittel nach Anspruch 6, dadurch gekennzeichnet, daß das Mittel 2 bis 10% der Verbindung (III) enthält.

8. Verfahren zum Schutz von Saatgut vor Pilzkrankheiten, dadurch gekennzeichnet, daß bei dem Verfahren auf das Saatgut eine fungizid wirksame Menge eines Mittels nach einem der vorhergehenden Ansprüche aufgebracht wird.

9. Verfahren nach Anspruch 8, dadurch gekennzeichnet, daß das Mittel derart auf das Saatgut aufgebracht wird, daß die Mengen der aktiven Verbindung, die pro 100 kg Saatgut aufgebracht werden, in den folgenden Bereichen liegen:

| | | |
|---|---|---|
| (I) | Furan-3-carboxanilid | 4 bis 30 g |
| | Verbindung (II) | 3 bis 15 g |
| | Verbindung (III) | 3 bis 20 g |

**Revendications**

1. Composition fongicide qui comprend (I) un furane-3-carboxanilide, caractérisée en ce que la composition est une composition synergique comprenant l'un ou les deux parmi:
(II) 1-(β-allyloxy)-2,4-dichlorophènéthyl)-imidazole; et
(III) 2-(4-thiazolyl)-1H-benzimidazole.

2. Composition selon la revendication 1, caractérisée en ce que le carboxanilide est du 2-méthylfurane-3-carboxanilide, du 2,5-diméthylfurane-3-carboxanilide ou du 2,4,5-triméthylfurane-3-carboxanilide.

3. Composition selon la revendication 1 ou la revendication 2, caractérisée en ce que la composition fongicide est dissoute dans un solvant.

4. Composition selon l'une quelconque des revendications précédentes, caractérisée en ce que la composition fongicide est mélangée à un support.

5. Composition selon la revendication 4, caractérisée en ce que le support est du talc minéral, du kaolin ou de la bentonite.

6. Composition selon l'une quelconque des revendications précédentes, caractérisée en ce qu'elle contient de 0,5 à 30% de furane-3-carboxanilide, de 0,5 à 10% du composé (I) et/ou de 0,5 à 15% du composé (II).

7. Composition selon la revendication 6, caractérisé en ce que la composition contient de 2 à 10% du composé (III).

8. Méthode de protection de semences contre une maladie fongique, caractérisée en ce que la méthode consiste à appliquer, aux semences, une quantité fongicidement efficace d'une composition selon l'une quelconque des revendications précédentes.

9. Méthode selon la revendication 8, caractérisée en ce que la composition est appliquée à la semence de façon que les quantités du composé actif appliquées pour 100 kg de semence soient comme suit:

| | |
|---|---|
| (I) furane-3-carboxanilide | de 4 à 30 g |
| composé (II) | de 3 à 15 g |
| composé (III) | de 3 à 20 g. |